# DEMANDE DE BREVET EUROPEEN

(11) **EP 1 990 187 A1**
(43) Date de publication de la demande: **12.11.2008**
(21) Numéro de dépôt: 08305157.3
(22) Date de dépôt: 07.05.2008
(51) Int. Cl.: B32B 27/12, B32B 27/32, B32B 27/36, B65D 65/40

(54) **Sac d'emballage en matière plastique**

(30) Priorité: 10.05.2007 FR 0754979
(71) Demandeur: Veriplast Flexible, 43290 Montfaucon en Velay (FR)
(72) Inventeur: Alaux, M. Patrick, 42240 UNIEUX (FR)
(74) Mandataire: Thivillier, Patrick

(57) **Abrégé**

Ce sac est composé d'un complexage de trois couches intimement liées :
- une couche intérieure (1) constituée par un film d'un matériau soudable et étanche ;
- une couche intermédiaire (2) constituée par un film d'un matériau de renfort,
- une couche extérieure (3) constituée par un film d'un matériau imprimable présentant un aspect de brillance avec coefficient de glissement élevé.

## Description

L'invention concerne les sacs d'emballage réalisés en matière synthétique ou en matière plastique.

Le domaine technique de l'invention s'applique à tous types de sacs quelle que soit sa forme de réalisation. Par exemple, le sac peut présenter une extrémité fermée constituant un fond, tandis que l'autre extrémité est ouverte en étant susceptible de coopérer avec des moyens pour fermer à volonté le sac de manière étanche ou non.

De même, la partie supérieure du sac peut être équipée d'un moyen apte à créer une ouverture temporaire donnant libre accès à l'intérieur du sac et susceptible d'être refermé et réouvert à volonté. Des soufflets latéraux peuvent également être formés symétriquement à partir de lignes de pliage ; ces soufflets sont réalisés lors de la réalisation du sac par tous moyens connus et appropriés. Une ou des poignées de préhension peuvent également être prévues.

A partir de cet exemple de conception de base, le sac peut être réalisé à partir d'une gaine ou d'un film en matière plastique qui peut être du PE laminé avec de l'OPPou bien du PE laminé avec du PET. L'épaisseur du PE est généralement comprise entre 120 et 160 microns environ, tandis que l'épaisseur du PET est de 12 à 25 microns environ.

Cette sélection de matière permet d'obtenir un sac étanche et imprimable dont les différentes parties constitutives peuvent être assemblées par soudure, lui conférant un aspect visuel attractif. Par contre, pour certaines applications et dans le cadre de sacs de grande contenance, notamment la résistance n'est pas toujours suffisante. Des risques de déchirure peuvent également apparaître lors de la manipulation des sacs avec par exemple des chariots élévateurs.

Selon un autre mode d'exécution, les sacs sont réalisés à partir d'un film de PP tissé, laminé avec de l'OPP. Il en résulte une très grande résistance. Par contre on observe un manque d'étanchéité. Il apparaît également que cette matière constitutive ne permet pas de réaliser une soudure des différentes parties constitutives du sac, lesquelles peuvent être assemblées par couture. Il en résulte une présentation qui n'est pas toujours acceptable en fonction des produits.

A partir de cet état de la technique, le problème que se propose de résoudre l'invention est de proposer un sac d'emballage qui soit très résistant et étanche et soudable afin de garder un aspect extérieur attractif.

Pour résoudre un tel problème, il a été conçu et mis au point un sac d'emballage en matière plastique caractérisé en ce qu'il est composé d'un complexage de trois couches intimement liées :
- une couche intérieure constituée par un film d'un matériau soudable et étanche ;
- une couche intermédiaire constituée par un film d'un matériau de renfort,
- une couche extérieure constituée par un film d'un matériau imprimable présentant un aspect de brillance avec un coefficient de glissement élevé.

Compte tenu des caractéristiques recherchées du film à savoir la soudabilité, l'étanchéité et l'esthétique la couche intérieure est un film de PE, la couche intermédiaire est un film de PP tissé, et la couche extérieure est un film de PET.

Avantageusement, le film de PE a une épaisseur d'environ 50 microns et le film de PET d'une épaisseur d'environ 12 microns.

Selon un mode de réalisation les trois couches sont intimement liées par une opération d'extrusion-lamination.

L'invention est exposée ci-après plus en détail à l'aide des figures des dessins annexés dans lesquels :
- la figure 1 est une vue en perspective d'un exemple de réalisation d'un sac d'emballage
- la figure 2 est une vue à caractère schématique en coupe et à très grande échelle montrant le complexage des trois couches constitutives du sac.

Comme indiqué, l'invention s'applique à tous types de sacs obtenus par tous moyens connus et appropriés. Par exemple, le sac peut être obtenu à partir d'une bobine d'un film en matière plastique souple soumis en continu à différentes opérations tels que pliage, soudure, réalisées de manière automatique.

Selon une des caractéristiques à la base de l'invention, la matière plastique constitutive du sac résulte d'un complexage de trois couches intimement liée (1), (2), et (3). La couche intérieure (1) est constituée par un film d'un matériau soudable et étanche.

Avantageusement, cette couche (1) est un film de PE.

La couche intermédiaire (2) est constituée par un film de matériau de renfort. Avantageusement, cette couche (2) est un film de PP tissé.

La couche extérieure (3) est constituée par un film à matériau imprimable présentant un aspect de brillance avec un coefficient de glissement élevé. Avantageusement, cette couche (3) est un film de PET.

Les trois couches (1), (2) et (3) sont intimement liées, notamment par un procédé parfaitement connu pour un homme du métier, d'extrusion-lamination (4).

Compte tenu de ces caractéristiques, la couche de PE est d'environ 50 microns tandis que l'épaisseur de la couche de PET est d'environ 12 microns.

Ce complexage constitutif de la matière à partir de laquelle est conformé le sac d'emballage permet d'obtenir un sac présentant des caractéristiques de haute résistance, de brillance, d'étanchéité en permettant de réaliser l'assemblage des différentes parties constitutives par soudure, participant à son esthétique.

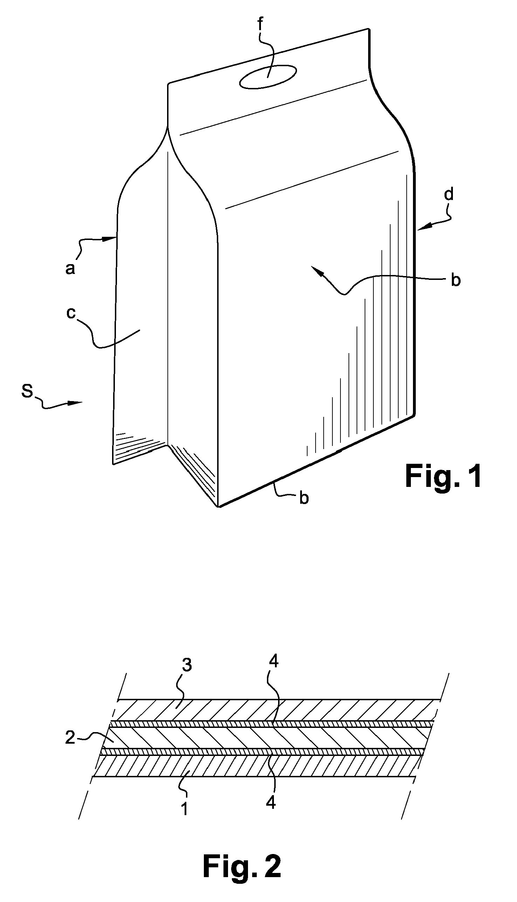

A titre d'exemple indicatif, comme le montre la figure 1, le sac désigné par son ensemble par (S) dont les différentes parties constitutives résultent du complexage (1), (2), et (3) peut présenter deux parois (a) (b) définies par des bords latéraux (c) et (d) conformés en soufflets en combinaison avec un fond (e). A l'opposé du fond (e), le sac peut présenter une ouverture temporaire pour donner un libre accès à l'intérieur du sac ; cette ouverture pouvant être refermée et réouverte à volonté. De même, au-delà de l'ouverture, la partie supérieure du sac peut présenter une poignée de préhension (f).

Les avantages ressortent bien de la description, en particulier on souligne et on rappelle que le complexage permet d'obtenir un sac de dimensions quelconques particulièrement résistant avec un coefficient de glissement élevé dont les différents parties constitutives peuvent être assemblées par soudure avec la possibilité de réaliser des impressions diverses avec un effet de brillance.

## Revendications

1. Sac d'emballage en matière plastique **caractérisé en ce qu'**il est composé d'un complexage de trois couches intimement liées :
- une couche intérieure (1) constituée par un film d'un matériau soudable et étanche ;
- une couche intermédiaire (2) constituée par un film d'un matériau de renfort,
- une couche extérieure (3) constituée par un film d'un matériau imprimable présentant un aspect de brillance avec coefficient de glissement élevé.

2. Sac d'emballage selon la revendication 1, **caractérisé en ce que** la couche intérieure (1) est un film de PE.

3. Sac d'emballage selon la revendication 1, **caractérisé en ce que** la couche intermédiaire (2) est un film de PP tissé.

4. Sac d'emballage selon les revendications 2 et 3, **caractérisé en ce que** la couche extérieure (3) est un film PET.

5. Sac d'emballage selon la revendication 1, **caractérisé en ce que** le film de PE a une épaisseur d'environ 50 microns et le film de PET d'une épaisseur d'environ 12 microns.

6. Sac d'emballage selon la revendication 1, **caractérisé en ce que** les trois couches (1), (2), (3) sont intimement liées par une opération d'extrusion-lamination.
